(19) **Europäisches Patentamt / European Patent Office / Office européen des brevets**

(11) **EP 4 557 880 A1**

(12) # DEMANDE DE BREVET EUROPEEN

(43) Date de publication:
**21.05.2025 Bulletin 2025/21**

(21) Numéro de dépôt: **24212744.7**

(22) Date de dépôt: **13.11.2024**

(51) Classification Internationale des Brevets (IPC):
**H04W 84/12** (2009.01)  **H04W 48/20** (2009.01)

(52) Classification Coopérative des Brevets (CPC):
**H04W 84/12; H04W 48/20**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **20.11.2023 FR 2312730**

(71) Demandeur: **SAGEMCOM BROADBAND SAS
92270 Bois-Colombes (FR)**

(72) Inventeur: **LE ROUX, Sylvain
92270 BOIS-COLOMBES (FR)**

(74) Mandataire: **Novagraaf Technologies
Bâtiment O2
2, rue Sarah Bernhardt
CS90017
92665 Asnières-sur-Seine Cedex (FR)**

(54) **PROCÉDÉS ET DISPOSITIFS DE GESTION DE CONNEXION D'UNE STATION DE RÉSEAU DE COMMUNICATION SANS FIL**

(57) Est décrit un procédé mis en oeuvre par un premier dispositif de communication (106, 306) comprenant la réception (1.3) d'un identifiant d'une station (301) connectée à un premier point d'accès (302) d'un premier ensemble de points d'accès diffusant un premier réseau sans fil (R1), la détermination (3.6) d'un point d'accès d'accueil d'un second ensemble de points d'accès diffusant un second réseau pour connecter la station ; transmission (4.2) au second réseau sans-fil du point d'accès d'accueil, d'une demande de configuration d'un troisième réseau sans fil par le point d'accès d'accueil, ladite configuration utilisant les éléments de connexion du premier réseau sans fil; et un déplacement de la station au point d'accès donné pour permettre à la station de se connecter au troisième réseau à l'aide des éléments de connexion du premier réseau sans fil. Sont également décrits un procédé mis en oeuvre par un second dispositif, comprenant un contrôleur du premier réseau, ainsi des dispositifs de mise en oeuvre.

[Fig. 2]

## Description

### Domaine technique

Sont décrits des procédés et dispositifs de gestion de connexion d'une station de réseau de communication sans fil, notamment pour gérer la transition de la station entre deux points d'accès. Le domaine d'application est celui des réseaux sans fil.

### Arrière-plan technique

Dans un réseau internet sans fil, par exemple un réseau domestique, certaines zones peuvent ne pas être couvertes correctement par les équipements de réseau installés par un client. Cependant, ces mêmes zones peuvent être desservies par un ou plusieurs points d'accès d'autres réseaux, par exemple le réseau d'un voisin. L'accès à un réseau autre que celui du client repose généralement sur un verrou exigeant un mot de passe et nécessite une configuration appareil par appareil pour permettre cet accès, cette configuration étant souvent effectuée manuellement. Ceci ne permet pas un basculement simple du réseau du client à un autre réseau.

Il est proposé de combler ces lacunes.

### Résumé

Un ou plusieurs modes de réalisation concernent un procédé mis en oeuvre par un premier dispositif de communication comprenant :

- la réception d'un identifiant d'une station connectée à un premier point d'accès d'un premier ensemble de points d'accès diffusant un premier réseau sans fil, le premier réseau sans fil étant configuré avec des premiers éléments de connexion, les éléments de connexion comprenant les informations nécessaires et suffisantes à une station pour se connecter à un réseau sans fil;
- la détermination d'au moins un second ensemble de points d'accès diffusant un second réseau sans fil, chaque second ensemble de points d'accès comprenant au moins un second point d'accès à portée de la station de façon à ce que la station puisse s'y connecter, chaque second réseau sans fil étant configuré avec des seconds éléments de connexion respectifs, distincts des premiers éléments de connexion ;

- la détermination, parmi l'au moins un second point d'accès, d'un point d'accès donné pour connecter la station ;
- l'initiation de la transmission au point d'accès donné, d'une demande de configuration d'un troisième réseau sans fil par le point d'accès donné, ladite configuration utilisant les éléments de connexion du premier réseau sans fil ;
- la transmission au premier réseau sans fil d'un message comportant un identifiant du point d'accès donné pour initier un déplacement de la station au point d'accès donné, pour permettre à la station de se connecter au troisième réseau à l'aide des éléments de connexion du premier réseau sans fil.

Il est à noter que le premier ensemble de points d'accès peut comporter un ou plusieurs points d'accès.

Ainsi, il est proposé que le second réseau utilise des caractéristiques propres au premier réseau pour une transition de la station vers un point d'accès du second réseau, cette transition étant transparente pour l'utilisateur. La zone de couverture du premier réseau est ainsi étendue par le second réseau. Le second réseau peut par exemple être un réseau maillé.

Selon un mode de réalisation, l'identifiant du point d'accès donné est le BSSID du point d'accès (par exemple un point d'accès virtuel) diffusant ledit troisième réseau sur le point d'accès d'accueil. Selon un autre mode de réalisation, cet identifiant est le SSID dudit troisième réseau.

L'invention est particulièrement avantageuse dans le contexte d'une zone à forte densité de réseaux sans fil.

Selon un ou plusieurs modes de réalisation, le procédé comprend

- la réception, du premier réseau sans fil, des premiers éléments de connexion ; et
- l'initiation de la transmission, au point d'accès donné, des premiers éléments de connexion.

Selon un ou plusieurs modes de réalisation, les premiers éléments de connexion comportant un SSID du premier réseau sans fil, un mot de passe et un mode de chiffrement.

Selon un ou plusieurs modes de réalisation, la détermination d'au moins un second ensemble de points d'accès diffusant un second réseau sans fil et du point d'accès donné comportant :

- l'obtention d'un ou plusieurs identifiants respectifs d'un ou plusieurs seconds réseaux sans fil de la part du premier réseau sans fil;
- la transmission à chacun des un ou plusieurs seconds réseaux identifiés par le ou les identifiants respectifs, d'une requête d'obtention d'au moins un critère de qualité d'au moins un point d'accès de chacun des un ou plusieurs seconds réseaux identifiés, le critère de qualité étant fonction d'une mesure de signal entre l'au moins un point d'accès et la station;
- la réception de l'au moins un critère de qualité pour l'au moins un point d'accès ;
- une sélection du point d'accès donné sur base de l'au moins un critère de qualité.

Selon un ou plusieurs modes de réalisation, le critère de qualité est de plus fonction d'au moins un parmi :

un nombre de stations connectées à un point d'accès d'un second réseau identifié; et
un temps d'émission disponible d'un point d'accès d'un second réseau identifié.

Selon un ou plusieurs modes de réalisation, la détermination d'un second point d'accès donné comporte :

- la détermination d'au moins un second réseau sur base d'un critère de proximité géographique de l'au moins un second réseau avec le premier réseau.

Selon un ou plusieurs modes de réalisation, l'au moins un second réseau sans fil est un réseau maillé.
Un ou plusieurs modes de réalisation concernent par ailleurs un premier dispositif de communication comprenant un processeur configuré pour mettre en oeuvre la méthode selon l'un des exemples de réalisation ci-dessus.
Un ou plusieurs modes de réalisation concernent par ailleurs un procédé mis en oeuvre par un second dispositif de communication d'un premier réseau de communication sans fil diffusé par un premier ensemble de points d'accès, le procédé comprenant :

- la transmission, à un premier dispositif de communication, d'un identifiant d'une station connectée à un point d'accès du premier réseau de communication,
- la transmission de premiers éléments de connexion destinés à la configuration d'un point d'accès d'un second réseau de communication à portée de la station, le second réseau sans fil étant diffusé par un second ensemble de points d'accès et étant configuré avec des seconds éléments de connexion distincts des premiers éléments de connexion, les éléments de connexion comprenant les informations nécessaires et suffisantes à une station pour se connecter à un réseau sans fil configuré avec ces éléments ;
- la réception, du premier dispositif de communication, d'un identifiant d'un point d'accès donné du second ensemble de points d'accès ayant configuré un troisième réseau de communication sans fil avec les premiers éléments de connexion ;
- l'initiation d'un déplacement de la station vers le point d'accès donné pour permettre à la station de se connecter au troisième réseau à l'aide des éléments de connexion du premier réseau sans fil.

Selon un ou plusieurs modes de réalisation, le procédé comprend la vérification si un critère de qualité de la connexion d'une station connectée à un point d'accès du premier réseau sans fil est en-dessous d'un seuil, un identifiant d'une station étant transmis dans l'affirmative.
Selon un ou plusieurs modes de réalisation, le procédé comprend

- la transmission à au moins un point d'accès du premier ensemble de points d'accès d'une requête pour déterminer un ou des seconds réseaux à portée de l'au moins un point d'accès ;
- la réception de l'au moins un point d'accès d'un ou de plusieurs identifiants respectifs des seconds réseaux déterminés comme étant à portée ;
- la transmission du ou des identifiants des seconds réseaux à portée au premier dispositif.

Un ou plusieurs modes de réalisation concernent par ailleurs un second dispositif de communication comprenant un processeur configuré pour mettre en oeuvre la méthode selon l'un des exemples de réalisation ci-dessus.
Selon un ou plusieurs modes de réalisation, le second dispositif comporte un contrôleur de réseau maillé.
Selon un ou plusieurs modes de réalisation, un ensemble de points d'accès comporte un ou plusieurs points d'accès.

## Brève description des figures

D'autres caractéristiques et avantages apparaîtront au cours de la lecture de la description détaillée qui va suivre pour la compréhension de laquelle on se reportera aux dessins annexés parmi lesquels :

- la figure 1 est un diagramme schématique d'un ensemble de réseaux sans fil voisins illustrant le contexte de l'invention ;
- la figure 2 est un algorigramme d'une méthode selon un exemple de réalisation ;
- la figure 3 est un diagramme de séquencement de messages détaillé d'un exemple de réalisation de la méthode de la figure 2 ;
- la figure 4 est un diagramme bloc d'un dispositif de mise en oeuvre d'un ou plusieurs exemples de réalisation ;
- la figure 5 est un diagramme bloc schématique illustrant la mise en oeuvre d'ESS et de SSIDs.

## Description détaillée

Dans la description qui va suivre, des éléments identiques, similaires ou analogues seront désignés par les mêmes chiffres de référence. Les diagrammes blocs, algorigrammes et diagrammes de séquence de messages dans les figures illustrent l'architecture, les fonctionnalités et le fonctionnement de systèmes, dispositifs, procédés et produits programmes d'ordinateur selon un ou plusieurs exemples de réalisation. Chaque bloc d'un diagramme bloc ou chaque phase d'un algorigramme peut représenter un module ou encore une portion de code logiciel comprenant des instructions pour l'implémentation d'une ou plusieurs fonctions. Selon certaines implémentations, l'ordre des blocs ou des phases peut être changé, ou encore les fonctions correspondantes peuvent être mises en oeuvre en parallèle. Les blocs ou phases de procédé peuvent être implémentés à l'aide de circuits, de logiciels ou d'une combinaison de circuits et de logiciels, et ce de façon centralisée, ou de façon distribuée, pour tout ou partie des blocs ou phases. Les systèmes, dispositifs, procédés et méthodes décrits peuvent être modifiés, faire l'objet d'ajouts et/ou de suppressions tout en restant dans le cadre de la présente description. Par exemple, les composants d'un dispositif ou d'un système peuvent être intégrés ou séparés. Également, les fonctions décrites peuvent être mises en oeuvre à l'aide de plus ou de moins de composants ou de phases, ou encore avec d'autres composants ou à travers d'autres phases. Tout système de traitement de données adapté peut être utilisé pour l'implémentation. Un système ou dispositif de traitement de données adapté comprend par exemple une combinaison de code logiciel et de circuits, tels un processeur, contrôleur ou autre circuit adapté pour exécuter le code logiciel. Lorsque le code logiciel est exécuté, le processeur ou contrôleur conduit le système ou dispositif à mettre en oeuvre tout ou partie des fonctionnalités des blocs et/ou des phases des procédés ou méthodes selon les exemples de réalisation. Le code logiciel peut être stocké dans une mémoire ou un support lisible accessible directement ou à travers un autre module par le processeur ou contrôleur.

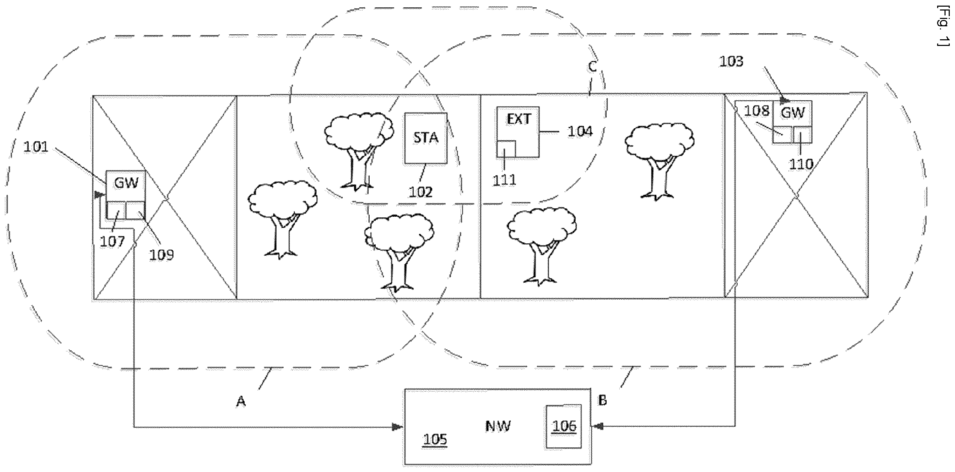

La figure 1 est un diagramme schématique d'un ensemble de réseaux sans fil voisins illustrant le contexte d'un ou plusieurs exemples de réalisation de façon non limitative. Dans l'exemple de la figure 1, deux réseaux sans fil sont illustrés, les réseaux A et B, dont la portée respective est illustrée par des zones délimitées par des tirets. Le réseau A comporte une passerelle ('GW') comprenant une fonctionnalité de point d'accès ('AP') 101, tandis que le réseau B comporte une passerelle comprenant une fonctionnalité point d'accès 103. Les passerelles 101 et 103 sont reliées à un réseau 105 d'un opérateur de réseau, par exemple par une connexion par fibre optique. Dans l'exemple simplifié de la figure 1, une station ('STA') 102 est associée à la passerelle 101, et un étendeur de réseau sans fil 104 ('EXT'), dit « extender » en anglais, est associé à la passerelle 103. Un dispositif 106 fait partie du réseau ('NW') 105 de l'opérateur ou est connecté à ce dernier. Le dispositif 106, qui est par exemple un serveur, est sous le contrôle de l'opérateur de réseau ou d'un tiers (désignés par 'fournisseur de service') et fournit les fonctionnalités décrites plus loin. Ces fonctionnalités peuvent également être fournies par plusieurs dispositifs, selon les implémentations. Le fournisseur de service est l'entité qui propose le service décrit dans les divers modes de réalisation.

Chaque réseau comporte un contrôleur, qui est une entité chargée de son pilotage et de la communication avec le réseau de l'opérateur et les dispositifs du fournisseur de service. Dans la figure 1, les contrôleurs respectifs des réseaux A et B sont désignés par les références 107 et 108 et sont hébergés par les passerelles 101 et 103. Un contrôleur peut être disposé dans un autre dispositif que la passerelle. Tout appareil ayant une fonction de point d'accès possède de plus une entité chargée du fonctionnement de ce point d'accès. Dans la figure 1, ces entités sont référencées respectivement 109, 110 et 111 pour les passerelles 101, 103 et l'étendeur 104. Par entité, on entend une composante logicielle, matérielle ou une combinaison des deux.

Bien que dans l'exemple de la figure 1, les deux passerelles 101 et 103 soient connectées à un même réseau opérateur, le cas de connexions à des réseaux distincts n'est pas exclu. Les réseaux sans fil A et B sont par exemple des réseaux sans fil locaux ou domestiques.

Dans le cadre des exemples de réalisation décrits, les deux réseaux A et B sont des réseaux sans fil multi-point d'accès, comprenant un ou plusieurs points d'accès contrôlés par un contrôleur central. Un exemple de réseau multi-point d'accès maillé est décrit dans la norme dont l'appellation commerciale est 'Wi-Fi EasyMesh' (marque déposée) maintenue par l'organisation 'WiFi Alliance' (marque déposée). Les principes décrits sont cependant applicables à d'autres types de réseau sans fil, y compris des réseaux non maillés.

La norme 'Wi-Fi EasyMesh' définit un réseau sans fil avec potentiellement de multiples points d'accès et comprenant un contrôleur multi-point d'accès. Un contrôleur multi-point d'accès possède une fonction de point d'accès et de contrôle d'autres points d'accès de son réseau, ces autres points d'accès comportant une fonctionnalité, désignée par le terme 'agent', qui est une fonctionnalité de point d'accès en tant que tel.

En revenant à l'exemple de la figure 1 et en le plaçant dans le cadre d'un réseau 'EasyMesh', les contrôleurs 107 et 108 sont des contrôleurs multi-point d'accès, et les entités 109 à 111 gérant les points d'accès sont des agents de point d'accès.

Selon un ou plusieurs exemples de réalisation, un point d'accès, dit point d'accès d'accueil, d'un premier réseau sans fil configure un réseau avec les éléments de connexion d'un second réseau sans fil, auquel une station est connectée. Les éléments de connexion sont les informations nécessaires et suffisantes à la connexion d'une station au second réseau sans fil.

Les premier et second réseaux sont par exemple des réseaux sans fil selon la famille de normes IEEE 802.11 diffusés respectivement par deux ensembles de points d'accès. Il est à noter qu'un ensemble peut comporter un ou plusieurs points d'accès. Chacun des deux réseaux correspond à un ensemble de services étendus (ESS pour 'Extended Service Set' en anglais) distinct. Un ESS est constitué d'un ou plusieurs ensembles de services de base (BSS pour 'Basic Service Set' en anglais). Un ESS possède un identifiant, appelé SSID (identifiant de l'ensemble des services ou 'Service Set IDentifier' en langue anglaise), utilisé par chaque BSS de cet ESS. Chaque BSS possède cependant un identifiant propre, appelé BSSID. Le réseau additionnel créé par le point d'accès d'accueil avec les éléments de connexion du second réseau est par exemple un réseau correspondant à un troisième ESS, mais utilisant le SSID du premier réseau.

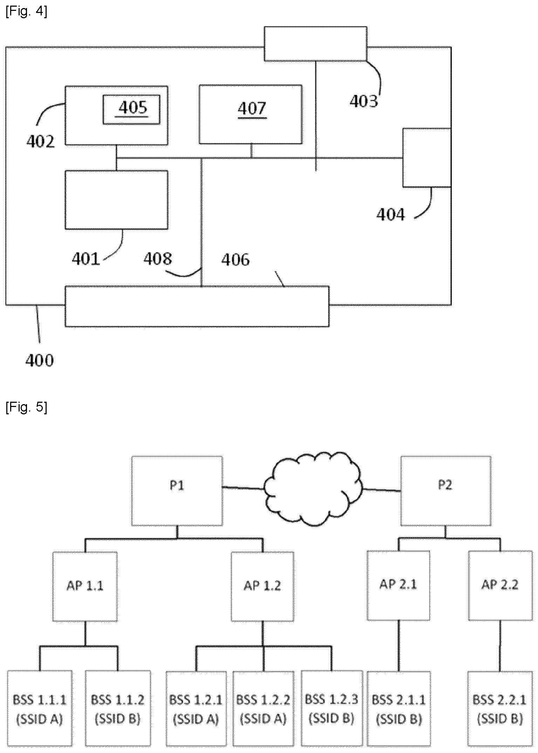

La figure 5 est un diagramme bloc schématique illustrant la mise en oeuvre d'ESS et de SSIDs. Le diagramme montre deux passerelles P1 et P2. La passerelle P1 est reliée à deux points d'accès, respectivement AP1.1 et AP1.2. La passerelle P2 est également reliée à deux points d'accès, AP2.1 et AP2.2. Le point d'accès AP1.1 créé deux BSS, les BSS 1.1.1 et 1.1.2. Le point d'accès AP1.2 créé trois BSS, respectivement 1.2.1, 1.2.2 et 1.2.3. Le point d'accès AP2.1 créé un BSS 2.1.1, tandis que le point d'accès AP2.2 créé un BSS 2.2.1. Un premier ESS comprend les BSS 1.1.1, 1.2.1 et 1.2.2. Ce premier ESS possède un SSID 'A'. Un second ESS comprend les BSS 1.1.2 et 1.2.3. Ce second ESS possède un SSID 'B'. Un troisième ESS comprend les BSS 2.1.1 et 2.2.1. Ce troisième ESS possède également le SSID 'B'. On a donc deux ESS qui ont le même SSID, bien que les points d'accès créant les BSS respectifs du second et du troisième ESS soient reliés à des passerelles différentes.

Dans l'exemple de la figure 1, le premier réseau est le réseau B et le second réseau est le réseau A.

La station peut ainsi facilement se connecter au réseau nouvellement créé par le point d'accès d'accueil, puisque la station dispose déjà de toutes les informations nécessaires et suffisantes pour s'y connecter, sous la forme des éléments de connexion. Une intervention manuelle de configuration n'est alors pas nécessaire, que ce soit celle d'un utilisateur de la station ou celle d'un administrateur du second réseau sans fil.

Le second réseau sans fil est voisin du premier réseau sans fil en ce sens que la station, tout en étant connectée à un point d'accès du premier réseau, est à portée d'au moins un point d'accès du second réseau pour pouvoir s'y connecter suite à une demande de transition vers ce point d'accès du second réseau.

Le point d'accès d'accueil est adapté pour lui permettre à la fois de diffuser un réseau sans-fil sur base des informations de connexion du second réseau, tout en continuant à diffuser le premier réseau sans-fil et en restant connecté à son réseau sans fil propre. Le point d'accès d'accueil peut par exemple configurer plusieurs points d'accès virtuels sur une même radio. Il peut également disposer de plusieurs radios pour travailler sur plusieurs bandes de fréquences.

Le premier et le second ESS se différencient par des éléments de connexion distincts et sont reliés à un ou des réseaux opérateur par des passerelles distinctes. Quand la station se connecte à un ESS diffusé par le second réseau, sa connectivité au-delà du second réseau sans fil passe donc par une autre passerelle que celle du premier réseau.

Dans le cadre d'un réseau de type IEEE 802.11 par exemple, les éléments de connexion comportent un identifiant du réseau comme le SSID, un mot de passe et le mode de chiffrement. Dans d'autres contextes, ces informations peuvent différer.

Dans l'exemple de la figure 1, la station 102 est par exemple située en limite de la zone de couverture de son réseau A, dans des conditions de qualité de service en-dessous d'un seuil acceptable. Cette station est cependant située dans la zone de couverture du réseau B, qui peut potentiellement lui fournir une qualité de service au-dessus du seuil attendu. Dans un tel cas, l'étendeur 104 peut configurer un réseau sans fil C en utilisant les éléments de connexion du réseau A. La passerelle 103 peut également créer ce réseau si elle est à portée de la station 102. Cette dernière peut ensuite se connecter au nouveau réseau C.

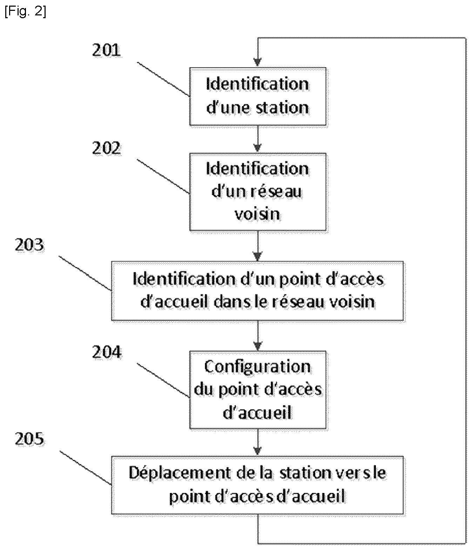

La figure 2 est un algorigramme d'un procédé selon un ou plusieurs modes de réalisation.

Le procédé comporte:

- 201 - Identification d'une station susceptible de migrer vers un point d'accès d'accueil hors réseau initial de la station.
- 202- Identification d'un ou plusieurs réseaux sans fil voisins.
- 203 - Identification, dans le ou les réseaux voisins, d'un point d'accès susceptible d'accueillir la station, appelé point d'accès d'accueil.
- 204 - Transfert des éléments de connexion du réseau sans fil auquel la station est associée et configuration d'un réseau sans fil par le point d'accès d'accueil avec les éléments de connexion.
- 205 -Déplacement de la station vers le point d'accès d'accueil.

Une première étape 201 comprend l'identification d'au moins une station susceptible de bénéficier d'un déplacement vers un autre réseau. Une telle station est dite station 'éligible' dans ce qui suit.

A titre d'exemple et comme déjà brièvement évoqué, une station éligible peut être une station susceptible d'obtenir une meilleure qualité de service par le déplacement vers un point d'accès d'accueil d'un autre réseau.

Selon un mode de réalisation de cette étape, le niveau du signal émis par une station est vérifié pour l'ensemble des points d'accès du réseau actuel de la station. Si ce niveau est inférieur à un seuil pour l'ensemble des points d'accès, alors la station est éligible.

Dans l'exemple d'un réseau tel que celui illustré par la figure 1, la première étape est par exemple principalement gérée par un contrôleur du réseau sans fil auquel la station éligible est connectée. Le contrôleur obtient les mesures mentionnées pour les stations du réseau sans fil et décide sur cette base si une station est éligible ou non. Une information correspondante est transmise par l'intermédiaire du réseau opérateur au dispositif du fournisseur de services.

Les étapes suivantes sont mises en oeuvre individuellement pour chaque station. Toutefois, il est à noter qu'il est tout à fait possible que certaines étapes soient mises en oeuvre pour une station éligible et n'aient pas à être répétées pour une autre station éligible. Par exemple, plusieurs stations d'un même réseau pourraient être transférées vers un même point d'accès d'accueil. Ce dernier ne devra configurer qu'une seule fois un réseau sans fil à l'aide des éléments de connexion du réseau d'origine des stations éligibles.

Une seconde étape 202 comprend, pour une station éligible, l'identification d'au moins un réseau sans fil voisin compatible.

Un réseau sans fil voisin est un réseau à proximité géographique du réseau initial de la station éligible. Un réseau sans fil voisin compatible est un réseau sans fil configuré pour permettre la mise à disposition d'un point d'accès d'accueil.

Selon un premier mode de réalisation de cette étape, une liste comportant un ou plusieurs réseaux voisins compatibles est générée en utilisant une base de données comportant les coordonnées géographiques de réseaux sans fil, par exemple l'ensemble des réseaux sans fil connectés au réseau de l'opérateur. La base de données permet de déterminer les coordonnées géographiques du réseau sans fil initial de la station éligible et de réseaux situés à proximité.

A titre d'exemple, la sélection de réseaux sans fil compatibles peut se faire sur base d'un seuil de distance par rapport au réseau initial de la station éligible. Ce seuil caractérise par exemple la portée maximale attendue d'un réseau sans fil domestique, mais peut être choisi différemment.

La base de données comporte par exemple des informations sur les autres réseaux sans fil compatibles de l'opérateur du réseau auquel le réseau sans fil initial de la station éligible est connecté. Selon une variante de réalisation, cette base de données comporte également des informations concernant des réseaux sans fil compatibles gérés par un ou plusieurs autres opérateurs.

Selon un second mode de réalisation de cette étape, le dispositif mettant en oeuvre la seconde étape connait un identifiant unique de chaque réseau sans fil compatible dans sa base de données. Cet identifiant unique peut être le BSSID (pour 'Basic Service Set Identifier' en anglais, ou encore 'Identifiant de l'Ensemble des Services de Base' en français). Le ou les points d'accès du réseau initial de la station éligible scannent l'environnement radio pour déterminer les identifiants des réseaux voisins. Ces identifiants peuvent par exemple et de façon non limitative être obtenus en écoutant les messages de type 'Beacon Frame' ('Trame balise' en français) émis régulièrement par les points d'accès de chaque réseau sans fil. La liste des BSSIDs ainsi trouvés est transmise au dispositif mettant en oeuvre la présente étape. Le dispositif détermine les réseaux sans fil voisins compatibles en déterminant les réseaux sans fil compatibles dans sa base de données dont les BSSIDs se retrouvent également dans la liste reçue. Selon ce mode de réalisation, la localisation géographique des différents réseaux n'est pas nécessaire, la notion de réseau voisin étant basée sur la capacité à recevoir un signal de ce réseau.

Dans l'exemple d'un réseau tel que celui illustré par la figure 1, le premier mode de réalisation de la seconde étape est par exemple mis en oeuvre principalement par un dispositif du fournisseur de services. Il est supposé que ce dispositif a accès à une base de données avec les localisations géographiques. Le second mode de réalisation peut être principalement mis en oeuvre par un contrôleur du réseau sans fil de la station éligible pour l'obtention de la liste des identifiants de réseaux voisins à partir des différents points d'accès de son réseau, et un dispositif du fournisseur de services mentionné plus haut, pour la comparaison de cette liste avec celle de réseaux sans fil compatibles.

Une troisième étape 203 comprend, pour une station éligible, l'identification d'un point d'accès d'accueil dans l'un des réseaux voisins compatibles déterminés à l'étape précédente pour cette station éligible.

Cette étape comprend le déclenchement, dans chacun des réseaux voisins compatibles précédemment identifiés, d'une phase de mesure d'un indicateur de qualité pour déterminer si le réseau est susceptible d'accueillir ladite station éligible.

Selon un mode de réalisation, l'indicateur de qualité est le niveau de signal émis par la station éligible (e.g. le RSSI), vu d'un point d'accès d'un réseau voisin compatible. Cette mesure peut être réalisée pour un, plusieurs ou tous les points d'accès d'un réseau voisin compatible.

Selon un mode de réalisation de cette étape, dans le cadre d'un réseau multi-points de type 'EasyMesh', cette mesure peut être effectuée entre autres par l'intermédiaire de la fonction « Unassociated STA monitoring » ('surveillance d'une station non associée' en français).

Selon une variante de réalisation, un ou plusieurs paramètres ou métriques additionnels autres que le niveau de signal sont utilisés pour déterminer dans quelle mesure un point d'accès d'un réseau voisin compatible est en mesure d'accueillir une station éligible. Ces paramètres peuvent comprendre un ou plusieurs parmi : le nombre de stations déjà connectées à un point d'accès, le temps d'émission disponible ('airtime' en anglais)... Un score basé sur les paramètres pris en considération peut alors être associé au couple (station éligible, point d'accès d'un réseau voisin compatible). Le score peut par exemple résulter d'une combinaison linéaire des paramètres retenus. L'équation 1 en est une illustration pour le cas de mise en oeuvre des trois paramètres cités ci-dessus :

[Equation 1]

$$Score\ (AP, STA) = a * NiveauDeSignal(AP, STA) + b * TxOP(AP) - c * NbSTA(AP)$$

où a, b et c sont des coefficients pondérateurs, NiveauDeSignal est le niveau de signal de la station éligible STA vu du point d'accès AP, TxOP est le temps d'émission disponible en pourcentage et NbSTA est le nombre de stations associées au point d'accès.

Pour chaque réseau voisin compatible et selon l'implémentation choisie, cette phase peut résulter en l'identification d'un ou plusieurs points d'accès (meilleur point d'accès, l'identification plusieurs points d'accès associés à des scores respectifs...), ou le cas échéant d'aucun point d'accès susceptible de servir de point d'accès d'accueil. Sur base du retour des différents réseaux voisins compatibles, un point d'accès d'accueil est choisi pour la station éligible.

Dans le cadre d'un réseau tel que celui illustré par la figure 1, les mesures des points d'accès d'un réseau sans fil voisin compatible peuvent par exemple être obtenues et traitées par le contrôleur de ce réseau sans fil et le résultat communiqué au dispositif du fournisseur de services mentionné plus haut.

Une quatrième étape 204 comprend la transmission des éléments de connexion du réseau sans fil de la station éligible au point d'accès d'accueil déterminé à l'étape précédente et la configuration d'un réseau sans fil à l'aide de ces éléments.

Selon un premier mode de réalisation de cette étape, la transmission est effectuée via un dispositif contrôlé par le fournisseur de services, par exemple le dispositif 106.

Selon un second mode de réalisation de cette étape, la transmission est effectuée directement entre le réseau sans fil de la station éligible et le réseau sans fil du point d'accès d'accueil choisi.

Le point d'accès d'accueil configure alors un réseau sans fil avec les éléments de connexion reçus.

Dans le cadre d'un réseau tel que celui illustré par la figure 1, la transmission peut s'effectuer depuis le contrôleur du réseau sans fil de la station éligible vers le contrôleur du réseau du point d'accès d'accueil. Le contrôleur du réseau du point d'accès d'accueil transmet alors les informations au point d'accès d'accueil. Dans le cadre spécifique d'un réseau 'EasyMesh', cette dernière étape peut s'effectuer par la mise en oeuvre du mécanisme d'autoconfiguration de point d'accès ('AP AutoConfiguration').

Une cinquième étape 205 comprend le déplacement d'une station éligible vers le point d'accès d'accueil.

Le déplacement d'une station éligible vers le point d'accès d'accueil comprend la transmission d'une requête en ce sens au contrôleur du réseau sans fil de la station éligible, cette demande comprenant un identifiant du point d'accès d'accueil. Cet identifiant est par exemple le BSSID du point d'accès d'accueil.

Selon un mode de réalisation, cette requête est envoyée par le dispositif du fournisseur de service.

Le contrôleur recevant la requête initie alors le déplacement de la station éligible vers le point d'accès d'accueil de façon connue en soi.

Par exemple ; dans le cadre d'un réseau sans fil multi-point d'accès, le contrôleur transmet une requête à l'entité ou agent en charge du point d'accès auquel la station éligible est connectée, cette entité ou agent relayant la requête à la station éligible.

Dans le cadre d'un réseau de type 'EasyMesh', cette requête peut prendre la forme d'un message 'Client Steering Request' ('Requête de direction de client' en français). Le point d'accès auquel la station éligible est connectée transmet alors une requête de transition à la station éligible, qui dans le cas d'un réseau de type 'EasyMesh' peut être un message 'BSS Transition Request' ('Requéte de transition BSS' en français) conforme à la norme IEEE 802.11V, le message comportant le BSSID du point d'accès d'accueil.

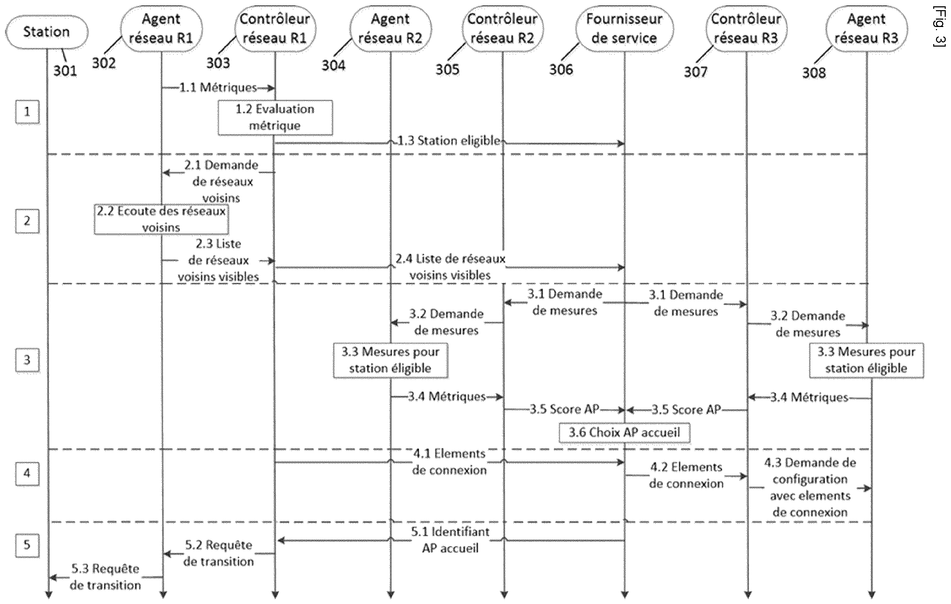

La figure 3 est un diagramme de séquence de messages illustrant le procédé de la figure 2 dans un exemple d'environnement de réseaux multi-point d'accès donné à titre illustratif. Dans la figure 3, les différentes étapes évoquées précédemment sont indiquées à gauche du diagramme, les sous-étapes étant indiquées sous forme de messages entre entités ou d'actions par des entités avec une référence X.Y, où X désigne l'étape et Y la sous-étape.

Une station 301 est initialement connectée à un réseau sans fil R1 à travers un point d'accès géré par un agent 302. Le réseau R1 comporte par ailleurs un contrôleur 303. Deux autres réseaux sans fil, R2 et R3, sont à proximité. Dans le cadre du présent exemple, les deux réseaux R2 et R3 sont des réseaux voisins et compatibles. Un dispositif 306 d'un fournisseur de services est connecté au réseau de l'opérateur auquel les réseaux R1 à R3 sont connectés.

En 1.1, le contrôleur 303 du réseau R1 obtient de la part de l'agent 302 une ou des métriques représentatives de la qualité de la connexion entre la station 301 et le point d'accès géré par l'agent 302. En 1.2, le contrôleur 303 évalue les métriques et décide si oui ou non la station 302 est éligible à un déplacement. On supposera dans le cadre de la figure 3 que c'est le cas. Le contrôleur 303 transmet alors en 1.3 un message au dispositif 306 l'informant du fait qu'une station est éligible. Selon un mode de réalisation non limitatif, le message comporte un identifiant de la station éligible, par exemple son adresse MAC.

En 2.1, le contrôleur 303 du réseau R1 demande une liste des réseaux voisins visibles à l'agent 302 de ce même réseau. En 2.2, l'agent initie une écoute des réseaux voisins et obtient les identifiants de ces réseaux à partir des trames balise. En 2.3, une liste des identifiants des réseaux voisins visibles, est transmise au contrôleur 303, qui la transmet en 2.4 au dispositif 306 du fournisseur de services.

En 3.1, le dispositif 306 demande aux contrôleurs des réseaux voisins visibles (ici les contrôleurs 305 et 307 des réseaux R2 et R3) de fournir des métriques pour la station éligible 301 vue de chaque point d'accès de chacun de ces réseaux (dans le cas de l'exemple simple de la figure 3, respectivement le point d'accès géré par l'agent 304 pour le réseau R2 et le point d'accès géré par l'agent 308 pour le réseau R3). Les contrôleurs initient la phase d'obtention des métriques auprès des agents en 3.2 et les agents la mettent en oeuvre en 3.3., par exemple dans le cas d'un réseau 'EasyMesh' par la fonction de surveillance mentionnée précédemment. Les métriques sont renvoyées par chaque agent 304 et 308 à son contrôleur respectif en 3.4. Les contrôleurs 305 et 307 traitent ces métriques pour obtenir des données utilisables - par exemple un score fonction des métriques - par le dispositif 306 pour effectuer le choix d'un point d'accès d'accueil parmi ceux proposés. Ce choix est effectué en 3.6.

Dans l'exemple de la figure 3, le point d'accès du réseau R3 est sélectionné comme point d'accès d'accueil. En 4.1, le contrôleur 303 du réseau R1 transmet les éléments de connexion du réseau R2 au dispositif 306, par exemple suite à une requête non illustrée effectuée par le dispositif 306 auprès du contrôleur 303 du réseau R1.

En 4.2, le dispositif 306 transmet les éléments de connexion du réseau R2 au contrôleur 307 du réseau R3. Ces éléments ont été obtenus au préalable par le dispositif 306. En 4.3, le contrôleur 307 du réseau R3 initie auprès de l'agent 308 la configuration d'un réseau sans fil au niveau du point d'accès d'accueil. Les éléments de connexion sont transmis à l'agent 308 dans cette perspective.

Il est à noter que l'exemple de la transmission des éléments de connexion du premier réseau au point d'accès d'accueil peut prendre d'autres chemins et/ou s'effectuer à d'autres moments. Notamment, la transmission peut être faite directement au point d'accès d'accueil sans transiter par le dispositif 306. Le contrôleur du premier réseau est dans ce cas informé de l'identifiant du point d'accès d'accueil avant que ce dernier soit configuré. La transmission des éléments de connexion peut, par exemple, être effectuée en phase 1, en parallèle avec la transmission 1.3 de l'identifiant de la station éligible. La personne du métier saura adapter la chronologie des étapes en fonction du contexte et des besoins.

En 5.1, le dispositif 306 transmet un identifiant du point d'accès d'accueil au contrôleur 303 du réseau R1 de la station éligible. Cette donnée permet au contrôleur d'envoyer en 5.2, à l'agent gérant le point d'accès auquel la station éligible 301 est connectée, une requête de transition de la station 301 vers le point d'accès d'accueil. Cette requête est relayée par l'agent 302 à la station 301 de manière adéquate en 5.3. La station 301 effectue alors une transition vers le point d'accès d'accueil de manière connue en soi (non illustré).

La figure 4 est un diagramme bloc d'un dispositif 400 pouvant être utilisé pour mettre en oeuvre l'une des méthodes décrites. Le dispositif 400 comporte un processeur 401, une mémoire 402, une interface utilisateur 403, une interface de communication 404 permettant la communication avec d'autres dispositifs du réseau sans fil, un afficheur 406 adapté pour l'affichage de données à un utilisateur, ainsi qu'une mémoire de travail 407. Les différentes composantes du dispositif 400 sont connectées à travers un bus de communication 404. La mémoire 402 comporte du code logiciel 405. La mémoire 407 est utilisée pour stocker et gérer les données à transmettre. Le dispositif peut comporter d'autres composants, et certains composants peuvent être absents, selon les besoins du contexte d'utilisation et de la fonction du dispositif. Lorsque le processeur exécute le code logiciel 405, il conduit le dispositif à mettre en oeuvre une méthode selon un ou plusieurs exemples de réalisation décrits, comme ceux décrits en relation avec la figure 2 et/ou la figure 3. Le dispositif 400 peut être une passerelle, un terminal ou une station mobile, un point d'accès ou un autre dispositif du réseau, tel un équipement de l'opérateur de réseau de télécommunication ou connecté à ce dernier.

Exemple 1 - Procédé mis en oeuvre par un premier dispositif de communication (106, 306) comprenant :

- la réception (1.3) d'un identifiant d'une station (301) connectée à un premier point d'accès (302) d'un premier ensemble de points d'accès diffusant un premier réseau sans fil (R1) , le premier réseau sans fil étant configuré avec des premiers éléments de connexion, les éléments de connexion comprenant les informations nécessaires et suffisantes à une station pour se connecter à un réseau sans fil;
- la détermination (2.4) d'au moins un second ensemble de points d'accès diffusant un second réseau sans fil (R2, R3), chaque second ensemble de points d'accès comprenant au moins un second point d'accès à portée de la station de façon à ce que la station puisse s'y connecter, chaque second réseau sans fil étant configuré avec des seconds éléments de connexion respectifs, distincts des premiers éléments de connexion ;
- la détermination (3.6), parmi l'au moins un second point d'accès, d'un point d'accès donné pour connecter la station ;
- l'initiation de la transmission (4.2) au point d'accès donné, d'une demande de configuration d'un troisième réseau sans fil par le point d'accès donné, ladite configuration utilisant les éléments de connexion du premier réseau sans fil ;
- la transmission (5.1) au premier réseau sans fil d'un message comportant un identifiant du point d'accès donné pour initier un déplacement de la station au point d'accès donné.

Exemple 2 - Procédé mis en oeuvre par un second dispositif de communication (101, 303) d'un premier réseau de communication sans fil (R1) diffusé par un premier ensemble de points d'accès, le procédé comprenant :

- la transmission (1.3), à un premier dispositif de communication (306), d'un identifiant d'une station connectée à un point d'accès du premier réseau de communication,
- la transmission (4.1) de premiers éléments de connexion destinés à la configuration d'un point d'accès d'un second réseau de communication à portée de la station, le second réseau sans fil étant diffusé par un second ensemble de points d'accès et étant configuré avec des seconds éléments de connexion distincts des premiers éléments de connexion, les éléments de connexion comprenant les informations nécessaires et suffisantes à une station pour se connecter à un réseau sans fil configuré avec ces éléments ;
- la réception (5.1), du premier dispositif de communication, d'un identifiant d'un point d'accès donné du second ensemble de points d'accès ayant configuré un troisième réseau de communication sans fil avec les premiers éléments de connexion ;
- l'initiation (5.2) d'un déplacement de la station vers le point d'accès donné.

## Revendications

1.  Procédé mis en oeuvre par un premier dispositif de communication (106, 306) comprenant :

    - la réception (1.3) d'un identifiant d'une station (301) connectée à un premier point d'accès (302) d'un premier ensemble de points d'accès diffusant un premier réseau sans fil (R1) , le premier réseau sans fil étant configuré avec des premiers éléments de connexion, les éléments de connexion comprenant les informations nécessaires et suffisantes à une station pour se connecter à un réseau sans fil;
    - la détermination (2.4) d'au moins un second ensemble de points d'accès diffusant un second réseau sans fil (R2, R3), chaque second ensemble de points d'accès comprenant au moins un second point d'accès à portée de la station de façon à ce que la station puisse s'y connecter, chaque second réseau sans fil étant configuré avec des seconds éléments de connexion respectifs, distincts des premiers éléments de connexion ;
    - la détermination (3.6), parmi l'au moins un second point d'accès, d'un point d'accès donné pour connecter la station ;
    **caractérisé par**
    - l'initiation de la transmission (4.2) au point d'accès donné, d'une demande de configuration d'un troisième réseau sans fil par le point d'accès donné, ladite configuration utilisant les éléments de connexion du premier réseau sans fil ;
    - la transmission (5.1) au premier réseau sans fil d'un message comportant un identifiant du point d'accès donné pour initier un déplacement de la station au point d'accès donné pour permettre à la station de se connecter au troisième réseau à l'aide des éléments de connexion du premier réseau sans fil.

2.  Procédé selon la revendication 1, comprenant

    - la réception (4.1), du premier réseau sans fil, des premiers éléments de connexion; et
    - l'initiation de la transmission (4.2), au point d'accès donné, des premiers éléments de connexion.

3.  Procédé selon l'une des revendications 1 et 2, les premiers éléments de connexion comportant un SSID du premier réseau sans fil, un mot de passe et un mode de chiffrement.

4. Procédé selon l'une des revendications 1 à 3, la détermination d'au moins un second ensemble de points d'accès diffusant un second réseau sans fil et du point d'accès donné comportant :

- l'obtention (2.4) d'un ou plusieurs identifiants respectifs d'un ou plusieurs seconds réseaux sans fil de la part du premier réseau sans fil ;
- la transmission (3.1) à chacun des un ou plusieurs seconds réseaux identifiés par le ou les identifiants respectifs, d'une requête d'obtention d'au moins un critère de qualité d'au moins un point d'accès de chacun des un ou plusieurs seconds réseaux identifiés, le critère de qualité étant fonction d'une mesure de signal entre l'au moins un point d'accès et la station ;
- la réception (3.5) de l'au moins un critère de qualité pour l'au moins un point d'accès ;
- une sélection (3.6) du point d'accès donné sur base de l'au moins un critère de qualité.

5. Procédé selon la revendication 4, dans lequel le critère de qualité est de plus fonction d'au moins un parmi :

un nombre de stations connectées à un point d'accès d'un second réseau identifié ; et
un temps d'émission disponible d'un point d'accès d'un second réseau identifié.

6. Procédé selon l'une des revendications 1 à 3, la détermination d'un second point d'accès donné comportant :

- la détermination d'au moins un second réseau sur base d'un critère de proximité géographique de l'au moins un second réseau avec le premier réseau.

7. Procédé selon l'une des revendications 1 à 6, dans lequel l'au moins un second réseau sans fil est un réseau maillé.

8. Procédé selon l'une des revendications 1 à 7, un ensemble de points d'accès comportant un ou plusieurs points d'accès.

9. Procédé mis en oeuvre par un second dispositif de communication (101, 303) d'un premier réseau de communication sans fil (R1) diffusé par un premier ensemble de points d'accès, le procédé comprenant :

- la transmission (1.3), à un premier dispositif de communication (306), d'un identifiant d'une station connectée à un point d'accès du premier réseau de communication,
**caractérisé par**
- la transmission (4.1) de premiers éléments de connexion destinés à la configuration d'un point d'accès d'un second réseau de communication à portée de la station, le second réseau sans fil étant diffusé par un second ensemble de points d'accès et étant configuré avec des seconds éléments de connexion distincts des premiers éléments de connexion, les éléments de connexion comprenant les informations nécessaires et suffisantes à une station pour se connecter à un réseau sans fil configuré avec ces éléments ;
- la réception (5.1), du premier dispositif de communication, d'un identifiant d'un point d'accès donné du second ensemble de points d'accès ayant configuré un troisième réseau de communication sans fil avec les premiers éléments de connexion ;
- l'initiation (5.2) d'un déplacement de la station vers le point d'accès donné pour permettre à la station de se connecter au troisième réseau à l'aide des éléments de connexion du premier réseau sans fil.

10. Procédé selon la revendication 9, comprenant la vérification (1.2) si un critère de qualité de la connexion d'une station (301) connectée à un point d'accès du premier réseau sans fil (R1) est en-dessous d'un seuil, un identifiant d'une station étant transmis dans l'affirmative.

11. Procédé selon l'une des revendications 9 ou 10, comprenant :

- la transmission (2.1) à au moins un point d'accès du premier ensemble de points d'accès d'une requête pour déterminer un ou des seconds réseaux à portée de l'au moins un point d'accès ;
- la réception (2.3) de l'au moins un point d'accès d'un ou de plusieurs identifiants respectifs des seconds réseaux déterminés comme étant à portée ;
- la transmission (2.4) du ou des identifiants des seconds réseaux à portée au premier dispositif.

**12.** Procédé selon l'une des revendications 9 à 11, un ensemble de points d'accès comportant un ou plusieurs points d'accès.

**13.** Premier dispositif de communication comprenant un processeur configuré pour mettre en oeuvre la méthode selon l'une des revendications 1 à 8.

**14.** Second dispositif de communication comprenant un processeur configuré pour mettre en oeuvre la méthode selon l'une des revendications 9 à 12.

**15.** Second dispositif selon la revendication 14, le dispositif comportant un contrôleur de réseau maillé.

[Fig. 1]

[Fig. 2]

[Fig. 3]

[Fig. 4]

[Fig. 5]

Europäisches
Patentamt

European
Patent Office

Office européen
des brevets

# RAPPORT DE RECHERCHE EUROPEENNE

**Numéro de la demande**

EP 24 21 2744

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 9 860 809 B2 (ERICSSON TELEFON AB L M [SE]) 2 janvier 2018 (2018-01-02) | 1-6,8-14 | INV. H04W84/12 |
| Y | * figures 1,2,3,4,5 * * colonne 1, ligne 16 - colonne 11, ligne 8 * | 7,15 | ADD. H04W48/20 |
| | - - - - - | | |
| X | US 2015/350974 A1 (PATIL ABHISHEK PRAMOD [US] ET AL) 3 décembre 2015 (2015-12-03) | 1,9,13,14 | |
| A | * alinéa [0048] - alinéa [0188] * | 2-8, 10-12,15 | |
| | - - - - - | | |
| Y | US 11 395 186 B2 (QUALCOMM INC [US]) 19 juillet 2022 (2022-07-19) | 7,15 | |
| A | * colonne 5, ligne 6 - colonne 38, ligne 3 * | 1-6,8-14 | |
| | - - - - - | | |

**DOMAINES TECHNIQUES RECHERCHES (IPC)**

H04W

Le présent rapport a été établi pour toutes les revendications

| Lieu de la recherche | Date d'achèvement de la recherche | Examinateur |
|---|---|---|
| La Haye | 26 novembre 2024 | Papanikolaou, Eleni |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                              

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 21 2744

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-11-2024

| Document brevet cité au rapport de recherche | | Date de publication | Membre(s) de la famille de brevet(s) | | Date de publication |
|---|---|---|---|---|---|
| US 9860809 | B2 | 02-01-2018 | AR | 102498 A1 | 01-03-2017 |
| | | | EP | 3216272 A1 | 13-09-2017 |
| | | | US | 2016330662 A1 | 10-11-2016 |
| | | | US | 2018092009 A1 | 29-03-2018 |
| | | | WO | 2016072902 A1 | 12-05-2016 |
| US 2015350974 | A1 | 03-12-2015 | US | 2015350974 A1 | 03-12-2015 |
| | | | WO | 2015184379 A2 | 03-12-2015 |
| US 11395186 | B2 | 19-07-2022 | CN | 114514773 A | 17-05-2022 |
| | | | EP | 4046421 A1 | 24-08-2022 |
| | | | TW | 202123729 A | 16-06-2021 |
| | | | US | 2021120454 A1 | 22-04-2021 |
| | | | WO | 2021076316 A1 | 22-04-2021 |

EPO FORM P0460

Pour tout renseignement concernant cette annexe : voir Journal Officiel de l'Office européen des brevets, No.12/82